Europäisches Patentamt

**European Patent Office**

**Office européen des brevets**

(11) Publication number: **0 219 579**

**A1**

## (12) EUROPEAN PATENT APPLICATION

(21) Application number: **85306562.1**

(22) Date of filing: **16.09.85**

(51) Int. Cl.4: **C04B 28/04** , B28B 23/00 ,
//(C04B28/04,14:20,16:06,20:10)

(43) Date of publication of application:
**29.04.87 Bulletin 87/18**

(84) Designated Contracting States:
**DE FR GB**

(71) Applicant: **Barrett, Dave D., Jr.**
**1416 F Street**
**Lawton Oklahoma 73501(US)**

(72) Inventor: **Barrett, Dave D., Jr.**
**1416 F Street**
**Lawton Oklahoma 73501(US)**

(74) Representative: **Allen, William Guy Fairfax et al**
**J.A. KEMP & CO. 14, South Square Gray's Inn London, WC2(GB)**

(54) **Insulating cementitious mixture and method of use.**

(57) A cementitious mixture including water-repellent vermiculite, polypropylene fibers and cement. A preferred embodiment utilizes: asphalt-coated, expanded vermiculite; collated, fibrillated polypropylene fibers; and non-shrinking Portland cement. Test data indicates a greatly increased compressive strength compared to previously known vermiculite insulating concretes. A pre-fabricated building panel utilizing the mixture of the present invention, and a method of manufacture thereof, are also disclosed. Calculated R values indicate good thermal insulating characteristics.

EP 0 219 579 A1

## INSULATING CEMENTITIOUS MIXTURE AND METHOD OF USE

Background Of The Invention

1. Field Of The Invention

This invention relates to cementitious mixtures and their use, and more particularly, but without limitation, to lightweight or insulating cementitious mixtures, structures formed therefrom and methods of use thereof.

2. Description Of The Prior Art

Lightweight materials with good thermal insulating characteristics are desirable for use in building panels, and in particular, tilt-up wall panels. Use of lightweight aggregates in concrete have been used for such purposes, and the American Society for Testing and Materials has published ASTM Specification C322 entitled "Lightweight Aggregates For Insulating Concrete". This specification covers lightweight aggregates intended for use in concrete not exposed to weather, in which the prime consideration is the thermal insulating property of the resulting concrete. One problem with such materials is that the insulating aggregate greatly reduces the compressive strength of the concrete.

Specifically, vermiculite has been used in cementitious mixtures. For example, ASTM Specification C332, Group I covers one of two general types of lightweight aggregates, particularly aggregates prepared by expanding products such as perlite or vermiculite. The vermiculite in such aggregates provides the thermal insulating characteristics and is also used specifically because it will readily absorb and hold liquid water by capillary penetration. A material purporting to conform with ASTM Spec C332, Group I is sold under the name "Zonolite Insulating Concrete" by W. R Grace & Company.

The strength of lightweight insulating concretes is not sufficient to be suitable for exterior surfaces. Also, the vermiculite in such materials will still absorb water which is unsatisfactory for exterior surfaces.

The use of polypropylene fibers to reinforce cementitious mixtures is disclosed in United States Patent 3,591,395 to Zonsverld et al. Such fibres are sold under the name of "Forta Fibre" by Forta Fibre, Inc.

According to the present invention there is provided a cementitious mixture comprising a coated, insulating aggregate; cement; and a fibrous material for binding and distributing said aggregate in cement when admixing said mixture with water.

The coated, insulating aggregate used in the mixture may be vermiculite coated with a film of water-repellent material, such as asphalt. The asphalt-coated vermiculite allows the hardened material to have a surface suitable for exterior surfaces and acts to provide a greater compressive strength than normal insulating concretes. However, the water-repellent feature of the coated vermiculite has prevented its use in a cementitious mixture with water added. Accordingly, water-repellant vermiculite may not be used in conventional cementitious mixtures; the fibrous material utilized in the present invention must also be present.

The preferred fibrous material is made of polypropylene, and the polypropylene fibers utilized in the mixture are preferably collated, fibrillated, polypropylene fibers which form a fine lattice, or mesh, when mixed with cement and water. the fibers were deve loped originally to inhibit shrinkage and cracking in concrete. In addition to strengthening the material, the fibers bind and distribute the water-repellent vermiculite in the mixture of the present invention.

Tests indicate the preferred mixture has significantly greater compressive strength than previous standard vermiculite-cement mixtures, mixtures utilizing standard vermiculite with polypropylene fibers, and a vermiculite, cement and sand mixture recommended for increased strength by a manufacturer of standard vermiculite.

The water-repellent film covering the vermiculite reduces the number of sharp edges which results in lower stress concentrations in the dried cement, thus lessening the likelihood of crack propagation which increases compressive strength. It is also theorized that the ductile, resilient nature of water-repellent coatings such as asphalt increases the ability of the material to withstand load.

The mixture of the present invention also results in a better surface finish than standard vermiculite insulating concretes, and is durable enough to be used for floors and exterior surfaces as well as interior walls.

In utilizing the mixture in a wall panel, a prefabricated, load-bearing frame is filled with the mixture which hardens into a solid panel. Insulating material may be placed in the center of the frame and enclosed by the hardened material. In a preferred embodiment of the frame, all structural members of the frame have a substantially C-shaped cross section opening inwardly. Intermediately spaced vertical support members also have such a cross-sectional configuration.

A method of manufacture of a prefabricated building panel is disclosed in which a perimeter lip is formed around each side of the frame. The frame, with the lips attached, is laid on a smooth surface and is partially filled with the hardenable material made from the mixture of the present invention. The insulating layer is then installed, and additional hardenable material is added to fill the center of the frame. After hardening, the panel may be lifted to a vertical position by lifting means.

Calculated R values for the wall panel made in accordance with the invention indicate excellent insulating characteristics, and flame spread tests show excellent fiber resistance.

In order that the invention will become more fully understood, the following description is given, merely by way of example, reference being made to the accompanying drawings in which:-

FIG. 1 illustrates one embodiment of building wall having a surface panel formed by hardening the mixture of the present invention.

FIG. 2 is a horizontal cross section taken along lines 2-2 in FIG. 1.

FIG. 3 is a vertical cross section taken along lines 3-3 in FIG. 1.

FIG. 4 shows a horizontal cross-sectional view illustrating a method of making a building panel utilizing the mixture of the present invention.

The cementitious mixture of the present invention comprises a coated, lightweight aggregate, a fibrous material and cement. This dry mixture may be admixed with water to form a hardenable material which, when hardened, is lightweight, has desirable thermal insulating characteristics, and is suitable for wall structures and also floors and exterior surfaces.

The coated, lightweight aggregate used in the present invention is preferably a water-repellent vermiculite. This vermiculite is not the water-absorbing material used in previously known mixtures for insulating concretes. Instead, the vermiculite used is an expanded vermiculite which has been coated with a film of water-repellent material, preferably, but not limited to, a bituminous material such as asphalt. This greatly reduces the water-holding capacity of the vermiculite, and the treated material sheds water. Normally, water-repellent vermiculite is immiscible in water, and when mixed with cement and water will simply float to the top before the mixture hardens. In fact, prior to this invention, the art has taught that water-repellent vermiculite should not be mixed with water or a cement-water mixture, because conventional mixtures require a water-absorbing material.

A water-repellent vermiculite suitable for use in the present invention, and a method of manufacturing such vermiculite, are described in United States Patent No. 2,824,022 to Sucetti. One such material is available under the name "Masonry Zonolite" from W. R. Grace & Company. This water-repellent vermiculite has been used in the past as a fill insulation in wall openings, such as in masonry walls, where there is a danger of water leakage that would damage water-absorbing, or other hydrophilic, insulation.

The fibrous material utilized in the mixture of the present invention preferably consists of collated, fibrillated, polypropylene fibers such as those which have been developed by Forta Fibre, Inc. to be added to concrete mixtures to inhibit shrinkage and cracking, although it is not intended that the invention be limited to these materials. These fibers are formed into pre-stressed lattice bundles. When the fibers are added to the mix, the mixing action causes the bundles to open to a fine lattice, or mesh, form. The mixing also causes the fibers to spread uniformly through the mix. The fibers are designed to act to reinforce potential crack zones by strengthening microscopic flaws in the concrete.

In addition to strengthening the hardened material, the present invention utilizes the polypropylene fibers to bind and distribute water-repellent vermiculite in a mixture of cement and water as it is mixed and cured to a hardened mass, preventing the vermiculite from floating to the top. This allows the water-repellent vermiculite to be used despite the contrary teachings of the art. Thus, the polypropylene fibers are utilized in a novel manner, and a method of mixing water-repellent vermiculite with cement and water is made available. The advantages of such a mixture will be evident after studying the test results disclosed herein.

Collated, fibrillated, polypropylene fibers are manufactured in a variety of lengths and are known to be available in lengths from 19 mm to 63 mm. It has been found by experimentation that longer lengths of fibers will better hold the water-repellent vermiculite. In a preferred embodiment, the average length of the fibers is approximately 63 mm, but the present invention is not limited to fibers of such length.

To reduce the possibility of cracking of the hardened material, a non-shrinking Portland cement is utilized in the preferred embodiment. However, a mixture can be made utilizing the fibers and water-repellent vermiculite in standard cements as well, and therefore, the present invention is not limited to non-shrinking Portland cement.

In preparing the mixture to make the hardened material, the dry mixture of coated aggregate, fibrous material and cement is mixed with water in the manner of any conventional cementitious mixture. A mixing time of approximately 10 to 30 minutes is preferable, although other times may be suitable depending on the degree of agitation and the relative concentration of the components of the mixture.

For the dry mixture, the range of the concentrations of the components as a percentage by weight of the combined vermiculite, fiber and cement believed to be satisfactory are as follows:

Water-repellent vermiculite Approximately 9% to 56%

Polypropylene fibers Approximately 0.7% to 2%

Cement Approximately 43% to 89%

The ratio of dry-mixture-to-water by weight ranges from approximately 1:2.3 to 1:10.2, depending upon how wet a mixture is desired. It is possible that mixtures outside these ranges may also achieve satisfactory results, and therefore, it is not intended that the present invention be limited by the range of dry mixtures or the dry-mixture-to-water ratios listed above.

As a result of many tests, a preferred dry mixture for the present invention has been empirically determined. The concentration of the various components in the preferred dry mixture is as follows:

Approximately 17.3% by weight of asphalt-coated, expanded vermiculite

Approximately 1.4% by weight of collated, fibrillated, polypropylene fibers

Approximately 81.3% by weight of non-shrinking Portland cement

This dry mixture is mixed with water to form a hardenable material. The preferred dry-mixture-to-water weight ratio range is approximately 1:4.3 to 1:7.2 with approximately 1:5.8 considered optimum, but other ratios may also achieve satisfactory results.

Using the material concentration relationships of the preferred mixture, approximately one cubic metre of hardened material is obtained by a dry mixture containing approximately 11.9 kg of water-repellent vermiculite, approximately 11.9 kg of water-repellent vermiculite, approximately 0.95 kg of polypropylene fibres and approximately 55.76 kg of non-shrinking Portland cement, and then mixing with water. Approximately 297 litres to 4953 litres - (297 kg to 495 kg) of water may be used, but preferably, approximately 396 litres (396 kg) of water are used with the mixture.

Coarse aggregates, such as sand or gravel, as are commonly used in cementitious mixtures, may be added to the mixture of the present invention as desired to provide different textures and for additional strength of the hardened material.

Tests indicate that the preferred mixture of the present invention results in a hardened material of significantly greater compressive strength than previously known vermiculite-cement mixtures. Table I shows the results from one series of tests after an aging time of seven days, and Table II shows data on the same materials after an aging time of twenty-four days. In Tables I and II, the materials for the test samples are identified as follows:

A -the preferred mixture of the present invention

B -vermiculite insulating concrete following the vermiculite manufacturer's recommendations and ASTM Specification C332, Group I, using normal, expanded vermiculite and no polypropylene fibers

C -the standard vermiculite insulating concrete in test material B with the addition of polypropylene fibers

D -the mixture in test material B with sand added as recommended by the manufacturer of the vermiculite for increasing the strength of the material

TABLE I

Age Time: 7 days

| Test Material | Compressive Strength, $Kg/m^3$ |
|---|---|
| A | 0.105 |
| B | 0.044 |
| C | 0.044 |
| D | 0.051 |

TABLE II

Age Time:    24 days

| Test<br>Material | Compressive Strength,<br>Kg/m³ |
|---|---|
| A | 0.172 |
| B | 0.060 |
| C | 0.078 |
| D | 0.080 |

Table III shows results on the preferred mixture performed in another series of tests. Samples 1 and 2 in Table III indicate separate tests on the same material after aging 24 days.

TABLE III

Test Material A

| Age Time,<br>Days | Compressive Strength,<br>Kg/m³ |
|---|---|
| 6 | 0.132 |
| 24 (Sample 1) | 0.152 |
| 24 (Sample 2) | 0.162 |

As can be seen, both series of tests showed comparable compressive strength for the test samples made from the material of the present invention.

The water-repellent film covering the water-repellent vermiculite reduces the number of sharp edges on the vermiculite particles. When mixed with the cement, the smoother edges of the water-repellent vermiculite result in reduced stress concentrations in the cement, thus reducing the likelihood of crack propagation which increases compressive strength. It is theorized that the ductile, resilient nature of some water-repellent coatings such as asphalt results in an increased ability of the hardened material to withstand loading. It is also theorized that the heat of hydration generated as the cement sets causes the asphalt coating to become tacky which helps bind the vermiculite to the hardening cement. At any rate, the present invention results in a vermiculite-cement material with demonstrably greater strength than previously known in the art.

Another positive result of the present mixture is a better surface finish. Standard vermiculite insulating concrete has a chalky, powdery surface when hardened and is not durable enough for exterior surfaces. Material formed from the mixture of the present invention has no chalky finish. In addition to being stronger, the material has a smoother and slicker finish when dried. Nails can be driven into the surface and it can be sanded and varnished. Surface features can be routed and carved into the finished surface easily. The finished surface is durable and can be used as a floor surface as well as for wall or ceiling and roof surfaces. The material is also satisfactory for exterior surfaces as well as interior surfaces.

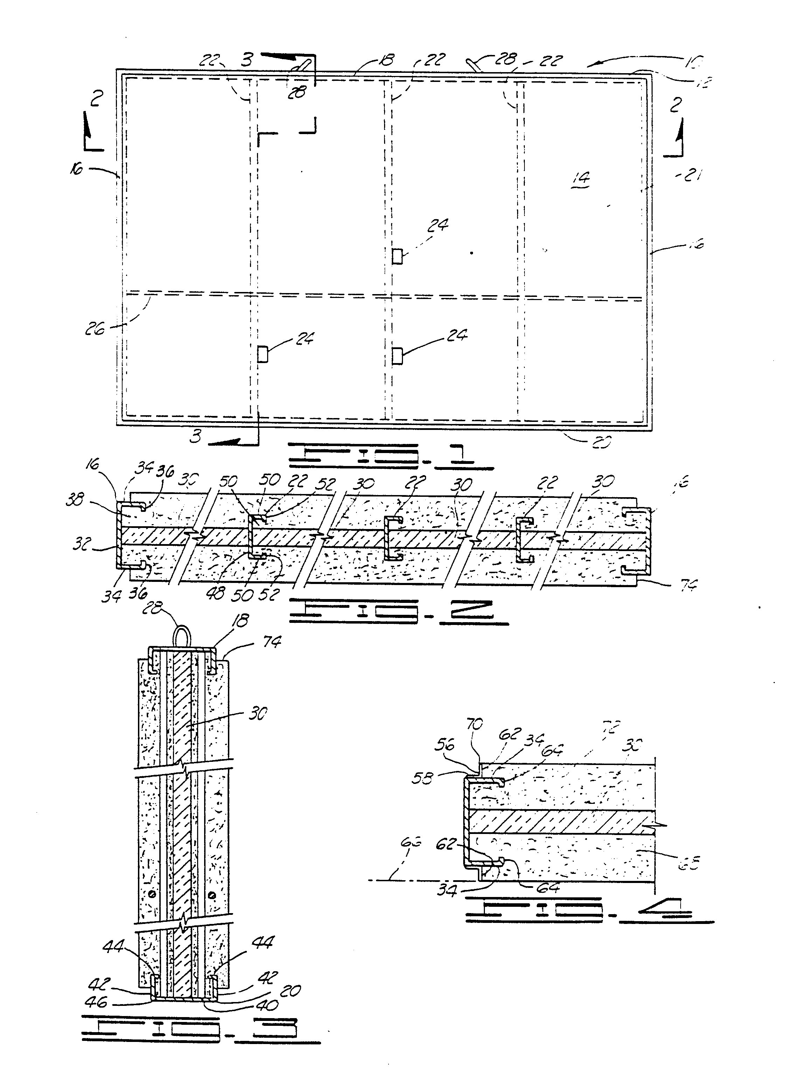

Referring now to the drawings, and particularly FIG. 1, a prefabricated wall panel utilizing the mixture of the present invention is generally designated by the numeral 10. A load-bearing frame 12 is filled with the mixture which, when cured or aged, hardens into a solid panel 14.

Frame 12 is of substantially rectangular configuration having a pair of vertical columns 16 and an upper horizontal beam 18 and a lower horizontal beam 20 defining a panel-shaped central opening 21. Intermediate vertical support members 22 may be fixedly installed in central opening 21 between horizontal beams 18 and 20 as necessary. Frame 12 and vertical support members 22 thus form a load-bearing structure before the mixture is poured to form panel 14. In this wall panel, the hardened material is not actually required as a load-bearing component of the structure, but does help contain and brace vertical support members 22.

Prior to pouring the mixture, such items as electrical receptacle boxes 24 and reinforcing bar 26 may be placed in the frame in a manner commonly known in the art. Electrical conduit (not shown) connected to receptacle boxes 24 and lifting means 28 may also be preinstalled.

Referring now to the horizontal cross-section view of FIG. 2, it can be seen that a layer of insulating material 30 is placed between vertical columns 16 and the adjacent vertical support member 22 and also between adjacent vertical support members 22. As shown in FIG. 3, insulating layer 30, such as thermal or sound insulation, extend vertically between lower horizontal beam 20 and upper horizontal beam 18.

Referring again to FIG. 2, each vertical column 16 has a substantially C-shaped cross section having a transverse member 32 with a first flange 34 perpendicular to transverse member 32 at opposite ends thereof and extending inwardly with respect to frame 12. At an end of each of these first flanges 34 opposite transverse member 32 is a second flange 36. Second flanges 36 extend toward one another and are substantially parallel to transverse member 32. Thus, each vertical column 16 defines a longitudinal channel 38 which opens toward central opening 21 of frame 12.

Similarly, as shown in FIG. 3, horizontal beams 18 and 20 each have a transverse member 40, first flanges 42 and second flanges 44 to define a longitudinal channel 46 which opens toward central opening 21 of frame 12.

Referring again to FIG. 2, it can be seen that vertical support members 22 also have a substantially C-shaped cross-sectional configuration, similar to that of vertical columns 16, except that vertical support members 22 are smaller. Each vertical support member 22 has a transverse member 48, first flanges 50 extending perpendicularly from the transverse member and a second flange 52 at an end of first flange 50 opposite transverse member 48. Second flanges 52 extend toward one another and are substantially parallel to transverse member 48. Each vertical support member 22 thus defines a longitudinal channel 54, and the opening direction of the channel is purely arbitrary. Transverse member 48 of vertical support member 22 is dimensioned such that it will fit between second flanges 44 of horizontal beams 18 and 22, as best shown in FIG. 3.

Referring now to FIG. 4, the method of manufacture of the prefabricated building panel utilizing the mixture of the present invention will be explained. Angle iron piece 56 has a first flange 58 which is temporarily attached to the external surface of first flanges 34 of both vertical columns 16. First flanges 58 of angle iron piece 56 are outwardly disposed with respect to frame 12. A second flange 60 of angle iron piece 56 thus extends transversely away from frame 12. Similar angle iron pieces (not shown) are temporarily attached to first flanges 42 of horizontal beams 18 and 20. All the angle iron pieces are joined at the corners of frame 12 such that second flanges 60 form a perimeter lip 62 around each side of the frame, outwardly spaced from inner perimeter edge 64 of frame 12.

Frame 12, with lip 62 attached to each side thereof, is laid flat on a smooth surface 66 such that it rests on one of said lips. Central opening 21 of frame 12 is partially filled with the mixture of the present invention to form a first hardened layer 68. Note that longitudinal channels 38 of vertical columns 16, longitudinal channels 46 of horizontal beams 18 and 20, and longitudinal channels 54 of vertical support members 22 are partially filled with the mixture, thus tying and interlocking first layer 68 into the load-bearing structure. If reinforcing bar 26 is used, first layer 68 is preferably sufficient to totally enclose the reinforcing bar. Also electrical receptacle boxes 24 and interconnecting conduit are installed prior to pouring the hardenable material.

Insulating layer 30 is placed on hardened layer 68 in central opening 21 of frame 12 as hereinbefore described. Additional reinforcing bar 26 is installed as desired, and the mixture is poured on top of insulating layer 30 up to a level even with a top surface 70 of upper angle iron lip 62 to form a second hardened layer 72. This also fills the remaining portion of longitudinal channels 38, 46 and 54 to tie and interlock second layer 72 into the load-bearing structure. Before second layer 72 hardens completely, it can be textured as desired in a manner known in the art.

After hardening, angle iron pieces 56 are removed. Thus, hardened layers 68 and 72 are formed to have a transverse edge 74 which extends away from frame 12 as best shown in FIGS. 2 and 3.

Once the pouring and hardening processes are complete, panel 10 can be lifted to a vertical position by lifting means 28 and installed in a building as desired.

The wall panel described above is but one embodiment of a building panel utilizing the mixture of the present invention, and it should be understood that the mixture can be used in many other building structures previously known in the art to provide a stronger, more durable panel than normal lightweight insulating concrete.

A coarse aggregate, such as gravel, may be included in the mixture to provide a rock-wall finish on the wall panel described above. Other coarse aggregates may also be used for color, surface finish and strength as desired.

Although using water-repellent vermiculite, the present invention retains the advantage of the excellent thermal insulating characteristics of standard vermiculite concrete mixtures.

For example, but not by way of limitation, calculated R values for a building panel of the embodiment described above, wherein the insulating layer is a thermal insulation, and having the indicated transverse dimensions, are as follows:

| | |
|---|---|
| Inside air film | 0.68 |
| 76.2 mm thick, first hardened layer | 7.20 |
| 50.8 mm thick, urethane thermal insulation layer | 12.00 |
| 76.2 mm thick, second hardened layer | 7.20 |
| Outside air film | 0.17 |
| Total R Value | 27.25 |

Another wall panel, utilizing no insulating layer in the center, would have a calculated R value as follows:

| | |
|---|---|
| Inside air film | 0.68 |
| 203.2 mm thick, hardened layer | 19.20 |
| Outside air film | 0.17 |
| Total R Value | 20.05 |

Obviously, even without an additional thermal insulating layer in the center, the material of the present invention has excellent thermal insulating characteristics.

Flame spread tests conducted in accordance with ASTM Specification E84, "Flame Spread Tests of Insulating Concrete Panels," show excellent fire resistance for the hardened material made from the mixture of the present invention. The tests were conducted on a solid four-inch thick panel having no insulating layer imbedded therein. The results were as follows:

Flame Spread: 0

Smoke Developed: 0

Ignition: None

There was some charring. However, the material did not explode and break up as conventional concrete will do when subjected to such testing.

It can be seen that the vermiculite cementitious mixture of the present invention, the hardened material formed by mixing the dry mixture with water and curing, the method of manufacturing a wall panel utilizing the mixture, and other methods of use of the mixture, are well adapted to carry out the objects and attain the ends and advantages mentioned, as well as those inherent therein.

**Claims**

1. A cementitious mixture comprising a coated, insulating aggregate; cement; and a fibrous material for binding and distributing said aggregate in said cement when admixing said mixture with water.

2. A mixture according to claim 1 characterised in that said coated, insulating aggregate comprises water-repellent vermiculite; and said fibrous material comprises collated, fibrillated polypropylene fibres.

3. A mixture according claim 2, characterised in that said water-repellent vermiculite is an asphalt-coated, expanded vermiculite.

4. A mixture according to claim 2 or 3, characterised in that said mixture contains:

said water-repellent vermiculite in a range of approximately 9 to 56 percent by weight of a total weight of said vermiculite, fibers and cement;

said polypropylene fibers in a range of approximately 0.7 to 2 percent by weight of said total weight of said vermiculite, fibers and cement; and

said cement in a range of approximately 43 to 89 percent by weight of said total weight of said vermiculite, fibers and cement.

5. A mixture according to claim 4, characterised in that said water-repellent vermiculite is approximately 17.3 percent by weight of said total weight of said vermiculite, fibers and cement;

said polypropylene fiber is approximately 1.4 percent by weight of said total weight of said vermiculite, fibers and cement; and

said cement is approximately 81.3 percent by weight of said total weight of said vermiculite, fibres and cement.

6. A mixture according to any preceding claim, characterised in that said fibres have an average length of approximately 63mm.

7. A mixture according to any preceding claim, characterised in that said cement is a non-shrinking portland cement.

8. A mixture according to any preceding claim, characterised in that it further comprises a coarse aggregate.

9. A hardened material produced by curing a mixture according to any preceding claim to which water has been added.

10. A hardened material according to claim 9, characterised in that said mixture is admixed with said water in a mixture-to-water weight ratio ranging approximately from 1:2.3 to 1:10.2, preferably 1:4.3 to 1:7.2 and more preferably 1:5.8.

11. A hardened material produced by curing a mixture comprising:

asphalt-coated, expanded vermiculite in a concentration of approximately 11.9 kgs/m³ of said hardened material;

collated, fibrillated polypropylene fibers in a concentration of approximately 0.95 kg/m³ of said hardened material;

non-shrinking Portland cement in a concentration of approximately 55.77 kg/m³ of said hardened material; and

water in a concentration of approximately 297 to 495 litres/m³ of said hardened material.

12. A method of making a building panel comprising the steps of constructing a load-bearing structure defining a panel-shaped opening therethrough, admixing a mixture according to any one of claims 1 to 8, filling said opening with an admixture of said mixture and water and curing said admixture to form a dry, hardened panel.

13. A method according to claim 12, characterised in that said frame is constructed such that said hardened panel is interlocked therewith.

14. A method according to claim 13, characterised in that said structure comprises a frame including a pair of vertical columns of substantially C-shaped cross section, each of said columns defining a longitudinal channel opening toward said panel-shaped opening; and an upper horizontal beam and a lower horizontal beam, each of said beams being of substantially C-shaped cross section and defining a longitudinal channel opening toward said panel-shaped opening; and at least one vertical support memeber of substantially C-shaped cross section fixedly mounted between said upper and lower horizontal beams of said frame.

15. A method according to claim 12, 13 or 14, characterised in that said hardened panel includes a first and a second hardened layer and in that said method further comprises the step of enclosing a layer of insulating material between said first and second layers of said hardened panel.

FIG-1

FIG-2

FIG-3

FIG-4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A- 739 335 (M.N. LIVERA) <br> * Claims 1,4,9 * <br> --- | 1 | C 04 B 28/04 <br> B 28 B 23/00// <br> (C 04 B 28/04 |
| X | DE-A-1 803 381 (GEBR. RHODIUS) <br> * Claims 1,2 * <br> --- | 1 | 14:20 <br> 16:06 <br> 20:10) |
| X | FR-A-1 569 790 (W.R. GRACE & Co.) <br> * Claim 1 * | 1 | |
| A | <br> --- | 2,3 | |
| Y | GB-A-1 404 001 (CAPE UNIVERSAL BUILDING PRODUCTS) <br> * Claims 1,3,11; page 1, line 88 - page 2, line 5, lines 27-31, 48,53 * <br> --- | 1-3,8-10 | |
| | | | **TECHNICAL FIELDS SEARCHED (Int. Cl.4)** |
| D,Y | US-A-2 824 022 (G. SUCETTI) <br> * Column 1, lines 19-23; claim 1 * <br> --- | 1-3,8-10 | C 04 B 28/00 <br> C 04 B 16/00 <br> C 04 B 20/00 |
| A | FR-A-1 534 302 (SHELL) <br> * Claims 1,2b,e * <br> & US-A-3 591 395 (Cat. D) <br> ------------------ | 2,4,6 | |

XXXXXXXXXXXXXXXXXXXXXXXXXXXXXXXXXX

| Place of search | Date of completion of the search | Examiner |
|---|---|---|
| The Hague | 22-04-1986 | DAELEMAN |

European Patent
Office

| | CLAIMS INCURRING FEES |
|---|---|

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid.

namely claims:

☐ No claims fees have been paid within the prescribed time limit. The present European search report has been drawn up for the first ten claims.

| X | LACK OF UNITY OF INVENTION |
|---|---|

The Search Division considers that the present European patent application does not comply with the requirement of unity of invention and relates to several inventions or groups of inventions.

namely:

1) Claims 1-11: Cementitious composition

2) Claims 12-15: A non-usual method of making a building panel with a load bearing structure, in which method a composition as claimed in claims 1-11 can be used.

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid.

namely claims:

☒ None of the further search fees has been paid within the fixed time limit. The present European search report has been drawn up for those parts of the European patent application which relate to the invention first mentioned in the claims.

namely claims: 1-11